# FASCICULE DE BREVET EUROPEEN

(11) **EP 3 665 516 B1**
(45) Date de publication et mention de la délivrance du brevet: **28.04.2021**
(21) Numéro de dépôt: 18819538.2
(22) Date de dépôt: 20.11.2018
(51) Int. Cl.: G02B 5/08

(54) **MODULE DE CHARGE UTILE POUR DRONE STRATOSPHERIQUE**
NUTZLASTMODUL FÜR STRATOSPHÄRISCHE DROHNE
PAYLOAD MODULE FOR STRATOSPHERIC DRONE

(30) Priorité: 20.11.2017 FR 1760939
(43) Date de publication de la demande: 17.06.2020
(73) Titulaire: Airbus Defence and Space SAS, 31402 Toulouse Cedex 4 (FR)
(72) Inventeur: GEORGY, Pierre-Luc, 31402 Toulouse Cedex 4 (FR); ROCA, Pere, 31402 Toulouse Cedex 4 (FR)
(74) Mandataire: Plasseraud IP
(86) Numéro de dépôt international: PCT/FR2018/052918
(87) Numéro de publication internationale: WO 2019/097195

(56) Documents cités:
- GB-A- 1 075 086
- Anonymous: "Stratospheric Observatory for Infrared Astronomy - Wikipedia", , 2 juillet 2004 (2004-07-02), XP055498993, Extrait de l'Internet: URL:https://en.wikipedia.org/wiki/Stratosp heric_Observatory_for_Infrared_Astronomy [extrait le 2018-08-10]
- Anonymous: "Wing-to-tail guide to Zephyr, the 'eternal' plane - BBC News", , 23 July 2010 (2010-07-23), XP055715493, Retrieved from the Internet: URL:https://www.bbc.com/news/av/world-us-c anada-10742411/wing-to-tail-guide-to-zephy r-the-eternal-plane [retrieved on 2020-07-16]

## Description

### DOMAINE DE L'INVENTION

L'invention concerne un module de charge utile de drone haute-altitude, ce type de drone étant également connu sous le nom de drone stratosphérique et faisant partie des objets nommés « pseudos-satellites haute altitude », ou encore nommés d'après l'acronyme HAPS (en anglais High Altitude Pseudo-Satellite). Ce type de drone est destiné à être envoyé dans la stratosphère, à une altitude de l'ordre de 18 à 25 km, et à fonctionner de manière autonome et inhabitée, exclusivement à partir d'énergie solaire.

### ETAT DE LA TECHNIQUE

On connait déjà des drones haute-altitude ou drones stratosphériques qui sont pourvus d'une charge utile optique, notamment pour l'observation et la cartographie du sol. L'intérêt de ce type d'appareils est multiple.

En premier lieu, l'altitude très élevée de fonctionnement place le drone en dehors de toute route aérienne, et également en dehors du climat, c'est-à-dire au-dessus des phénomènes météorologiques qui surviennent dans la troposphère, et en particulier des courants-jets (ou jetstream en anglais). Par conséquent les contraintes d'utilisation de ce type de drone sont plus réduites que pour des aéronefs volant dans la troposphère.

L'altitude élevée de ce type de drone leur permet aussi de fonctionner à l'énergie solaire, et potentiellement de voler de manière autonome pendant plusieurs semaines voire plusieurs mois, sans nécessité particulière d'atterrissage.

L'altitude de fonctionnement de ces drones leur confère également un champ de vue très large pour l'observation du sol. Enfin, et à la différence des engins spatiaux, les drones stratosphériques sont soumis à des contraintes très réduites pour leur lancement puisqu'il n'est pas nécessaire de les extraire de l'atmosphère terrestre.

Pour pouvoir fonctionner à partir exclusivement d'énergie solaire, les drones stratosphériques sont plus petits et plus légers que des avions classiques, mais avec une capacité d'emport réduite. La charge utile d'un tel drone doit donc être la plus compacte et la plus légère possible.

Un exemple de charge utile de drone stratosphérique connu est le système MEDUSA, qui est décrit dans l'article de T. Van AChteren et al. « Medusa, an ultra light weight multi-spectral camera for a HALE UAV », in Proceedings of SPIE, 10/2007, 10.1117/12.737718.

Le système MEDUSA n'a jamais été opéré en conditions stratosphériques, mais on peut prévoir un certain nombre de limitations du fait même de sa conception.

La charge utile MEDUSA est destinée à être fixée dans le nez d'un drone haute-altitude, et comporte un équipement optique à haute résolution ainsi que des équipements électroniques d'acquisition et de traitement, et une enveloppe formant logement et structure porteuse des équipements qu'elle contient.

L'équipement optique du système MEDUSA présente une ligne de visée fixe. Les rayons lumineux acquis par l'équipement optique pénètrent à l'intérieur de l'enveloppe par un hublot, et sont réfléchis par un miroir positionné à 45° pour être dirigés vers un système de lentilles permettant de focaliser ces rayons sur le capteur de l'équipement optique.

Par ailleurs, la fauchée statique du système MEDUSA est de l'ordre de 3 km.

De ce fait, il est probable que la précision du système pour l'acquisition d'images de la Terre soit très faible. En effet, un drone haute-altitude étant très léger et évoluant à faible vitesse (de l'ordre de 80km/h) pour pouvoir être propulsé uniquement à partir d'énergie solaire, il est sensible aux vents et fortement susceptible de s'incliner ou de dévier sous l'effet du vent. La ligne de visée étant fixe, il n'est pas possible d'adapter la zone observée en fonction de la position ou de la trajectoire du drone.

De plus, la fauchée statique étant également réduite, le défaut de précision sur la zone observée par le drone ne peut pas être compensé par un champ de vue très large qui engloberait une zone plus large que la zone d'intérêt que le drone doit observer.

Une précision aussi faible implique alors que le drone devrait survoler plusieurs fois la zone d'intérêt à observer pour garantir que des images de cette zone ont bien été acquises par l'équipement optique.

Il existe donc un besoin pour une charge utile de drone haute-altitude qui ne présente pas les inconvénients de l'art antérieur. Le document GB 1 075 086 A divulgue un module de charge utile de drone. Le document intitulé "Stratospheric Observatory for Infrared Astronomy", https://en.wikipedia.org/wiki/, divulgue un module de charge utile de drone comportant une ouverture.

### PRESENTATION DE L'INVENTION

Au vu de ce qui précède, un but de l'invention est de proposer un module de charge utile de drone stratosphérique permettant d'obtenir une précision de visée plus importante.

Un autre but de l'invention est de proposer un module présentant une fauchée statique plus large que l'art antérieur.

Un autre but de l'invention est de proposer un module présentant une masse et un volume réduits.

A cet égard, l'invention a pour objet un module de charge utile de drone stratosphérique, comprenant :
- une enveloppe, et
- un équipement optique comprenant un axe optique, monté dans l'enveloppe,
le module étant caractérisé en ce qu'il comporte en outre un miroir positionné sur l'axe optique en regard de l'équipement optique, le miroir étant orientable autour d'au moins un axe sur une plage angulaire,
et en ce que l'enveloppe comporte une ouverture traversante conformée de sorte que tout rayon lumineux accepté ou émis par l'équipement optique parallèlement à l'axe optique et réfléchi par le miroir passe au-travers de l'ouverture traversante, sur toute la plage angulaire du miroir.

Avantageusement, mais facultativement, le module de charge utile selon l'invention peut en outre comprendre au moins l'une des caractéristiques suivantes :
- le miroir est orientable selon un premier axe parallèle à l'axe optique, et selon une plage angulaire d'au moins 50°, de préférence égale à 60°, et selon un deuxième axe orthogonal à l'axe optique, selon une plage angulaire d'au moins 10°, de préférence égale à 15°.
- l'enveloppe comprend une structure porteuse adaptée pour être montée sur le drone, la structure porteuse comprenant :
   ∘ un bras porteur comprenant une première extrémité adaptée pour être montée sur le drone, et une extrémité libre, l'équipement optique étant monté sur le bras porteur, et
   ∘ au moins un bras secondaire rapporté sur l'extrémité libre du bras porteur, et sur lequel est monté le miroir orientable.
- l'extrémité libre du bras porteur s'étend selon une direction formant un angle compris entre 5 et 10° par rapport à la direction selon laquelle s'étend la première extrémité dudit bras porteur.
- l'enveloppe comprend une structure porteuse et un capot adapté pour être monté de manière amovible sur la structure porteuse, le capot comprenant une partie arrière de protection de l'équipement optique, et une partie avant de protection du miroir orientable, la partie avant comprenant un orifice traversant formant au moins en partie l'ouverture de l'enveloppe.
- Le module comprend en outre une cloison de séparation thermiquement étanche s'étendant dans la section transversale du module, entre l'équipement optique et le capot, à l'interface entre les parties avant et arrière du capot.
- la partie avant du capot comprend une face intérieure recouverte d'un revêtement noir absorbant la lumière.
- la partie arrière du capot comprend une face extérieure recouverte d'un revêtement thermiquement réfléchissant.
- le bras porteur est creux et comporte deux cloisons internes parallèles s'étendant selon la direction principale du bras, lesdites parois internes définissant entre elles un logement.
- le bras porteur comprend une paroi inférieure comportant au moins un orifice traversant débouchant dans le logement, et le module comprend un équipement optique secondaire positionné dans le logement et comprenant un axe optique passant par l'orifice traversant.
- Le module comprend en outre un revêtement thermiquement isolant positionné autour de l'équipement optique.
- L'équipement optique comprend une première portion contenant un ensemble d'éléments optiques, et une deuxième portion contenant une unité électronique d'acquisition ou d'émission, un revêtement isolant étant positionné autour de chaque portion, et le module comprend en outre un élément chauffant disposé entre la première portion et le revêtement isolant, et au moins une bande thermiquement conductrice s'étendant depuis la deuxième vers la première portion, entre l'équipement optique et le revêtement isolant.
- Le module comprend en outre au moins une carte électronique de contrôle et de traitement, ladite carte étant logée à l'intérieur de l'enveloppe, la carte électronique de contrôle et de traitement pouvant comprendre un radiateur comprenant une pluralité de plaques parallèles, et la carte électronique de contrôle et de traitement est positionnée de sorte que chaque plaque s'étende perpendiculairement à la direction principale du module.
- Le module comprend en outre une plaque radiative fixée à la carte électronique de contrôle et de traitement.

Un autre objet de l'invention est un drone stratosphérique, comprenant un module de charge utile selon la description qui précède.

Le module de charge utile selon l'invention présente une ligne de visée mobile, grâce à un miroir orientable et à une ouverture dans l'enveloppe du module, s'étendant sur la plage angulaire d'orientation du miroir orientable.

L'ouverture dans l'enveloppe du module est, à l'encontre des préjugés établis dans le domaine aérodynamique, dépourvue de tout hublot ou revêtement transparent permettant de fermer l'ouverture. Ceci présente plusieurs avantages. D'une part, l'ouverture peut être plus grande que si elle était pourvue d'un hublot, ce qui permet d'augmenter la fauchée statique du module. D'autre part, le module présente une masse réduite en l'absence d'un hublot.

Or, ce sont les conditions spécifiques d'utilisation d'un drone stratosphérique qui permettent de s'affranchir d'un hublot. En effet, la vitesse de croisière réduite par rapport à un avion circulant dans la troposphère, et la vitesse de lancement également réduite, diminuant sensiblement les vibrations sur le module, réduisent ainsi les contraintes aérodynamiques sur le drone.

La structure porteuse du module est également adaptée pour permettre l'agencement d'une large ouverture dans l'enveloppe sans impact défavorable de la tenue mécanique du module.

De plus, les caractéristiques thermiques de l'enveloppe sont adaptées à cette ouverture pour garantir le bon fonctionnement de l'équipement optique et des composants électroniques de contrôle et de traitement dans la plage de températures classique de la stratosphère, à savoir de -80°C à -40°C.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels :
- La figure 1 représente schématiquement un exemple de module de charge utile selon un mode de réalisation de l'invention,
- La figure 2a représente l'enveloppe du module,
- La figure 2b représente un exemple d'ouverture traversante dans l'enveloppe du module.
- La figure 3 représente schématiquement les dispositions relatives de l'équipement optique, du miroir et de l'ouverture traversante de l'enveloppe.
- La figure 4 est une vue en coupe transversale du bras porteur de la structure porteuse du module,
- La figure 5 représente schématiquement la mise en œuvre du contrôle thermique dans la partie arrière du module,
- La figure 6 représente schématiquement un drone stratosphérique comprenant un module de charge utile.

### DESCRIPTION DETAILLEE D'AU MOINS UN MODE DE REALISATION DE L'INVENTION

### Description générale du module

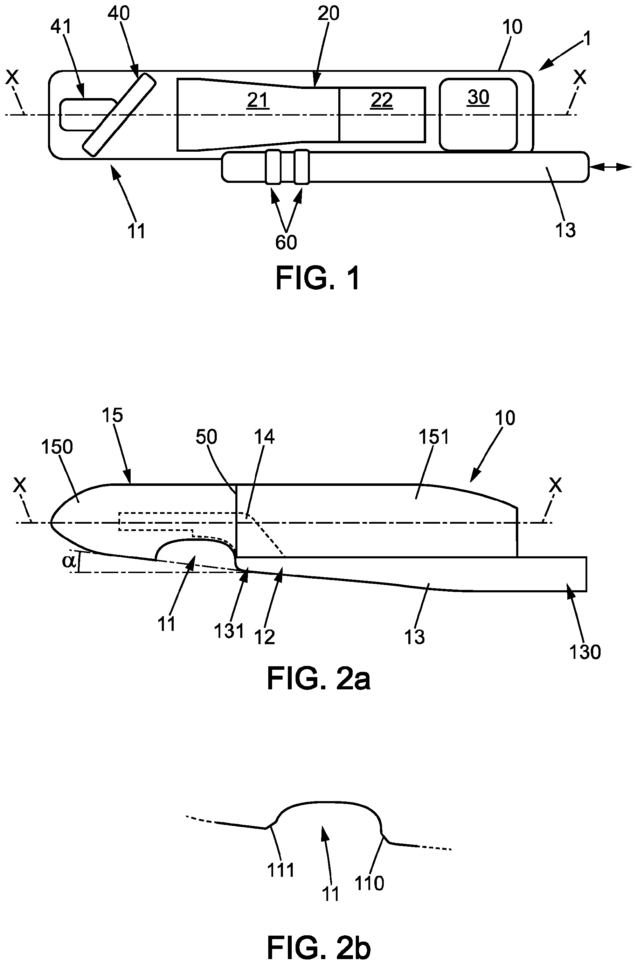

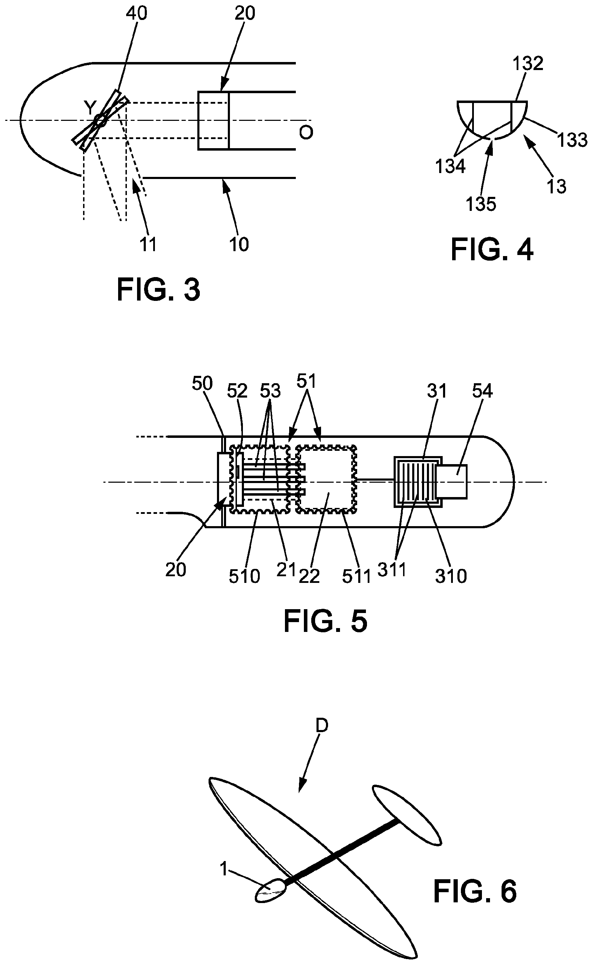

Sur les figures 1 et 6, on a représenté schématiquement un exemple de module de charge utile 1 d'un drone D haute-altitude, ou drone stratosphérique. Comme représenté schématiquement sur la figure 6, le module de charge utile 1 est porté par le drone D, et il est typiquement installé au niveau du nez du drone.

Le module 1 est de forme oblongue et s'étend selon une direction principale X-X, qui correspond sensiblement à une direction de déplacement du module lorsqu'il est monté sur un drone. Dans la suite, des caractéristiques avant et arrière seront définies par rapport à la direction principale X-X.

Ce module de charge utile 1 comporte une enveloppe 10 logeant au moins un équipement optique 20 et un système électronique de contrôle et de traitement 30. Optionnellement, le module de charge utile 1 peut également comprendre un ou plusieurs équipements optiques secondaires 60 décrits plus en détails ci-après.

L'équipement optique 20 peut par exemple, et de façon non limitative, comprendre une caméra qui peut être adaptée pour acquérir des images dans le domaine du visible ou de l'infrarouge, ou encore par exemple être un pointeur laser. L'équipement optique 20 comprend un axe optique O représenté sur la figure 3. L'axe optique O est avantageusement parallèle à la direction principale X-X du module.

L'équipement optique 20 est orienté vers l'avant du module. Il comprend de préférence une première portion contenant un ensemble d'éléments optiques 21, tels que des lentilles et/ou des miroirs, et une deuxième portion contenant une unité électronique 22 d'acquisition ou d'émission de lumière (dans le cas d'un émetteur laser), la première portion se situant à l'avant par rapport à la deuxième portion.

Le module de charge utile 1 comprend en outre un miroir 40 qui est disposé sur l'axe optique O, à l'avant de l'équipement optique 20 et en regard de celui-ci, en étant orienté de manière à pouvoir réfléchir des rayons lumineux provenant du sol vers l'équipement optique 20.

Afin de conférer une ligne de visée mobile à l'équipement optique 20, le miroir 40 est orientable au moyen d'un dispositif 41 d'orientation du miroir. Le miroir 40 est de forme elliptique, et orientable autour d'au moins un axe, et de préférence autour de deux axes orthogonaux, selon des plages angulaires respectives.

En particulier, le miroir 40 est de préférence orientable autour d'un premier axe qui est parallèle à l'axe optique O, et avantageusement confondu avec l'axe longitudinal ou de roulis du module 1, et autour d'un deuxième axe Y qui est orthogonal à l'axe optique O de l'équipement optique et orthogonal à la verticale. Cet axe correspond avantageusement à l'axe transversal du module ou l'axe de tangage. Il est représenté sur la figure 3.

Selon le premier axe (axe de roulis), le miroir est avantageusement orientable sur une plage angulaire d'au moins 50°, et de préférence de 60°.

Selon le deuxième axe (axe de tangage), le miroir est avantageusement orientable sur une plage angulaire d'au moins 10°, et de préférence de 15°.

Selon un mode de réalisation préféré, la position de référence du miroir sur laquelle sont centrées les plages angulaires d'orientation du miroir, est une position dans laquelle le plan du miroir forme un angle de 45° par rapport à la verticale, et le petit axe du miroir est parallèle à l'axe de tangage. En variante, la plage angulaire d'orientation du miroir selon l'axe de tangage n'est pas centrée sur la position de référence, mais au contraire le miroir peut être pivoté autour de cette position de référence par exemple de 5° dans un sens et de 10° dans l'autre sens.

Le système électronique de contrôle et de traitement 30 comprend au moins une carte électronique 31 de contrôle et de traitement, adaptée pour commander le fonctionnement de l'équipement optique 20, du dispositif d'orientation 41 du miroir 40, et le cas échéant du ou des équipements optiques secondaires 60.

Cette carte électronique 31 comprend au moins un processeur, une mémoire vive (par exemple mémoire RAM) et une mémoire supplémentaire (non représentés) dédiée au stockage de données, par exemple au stockage d'images acquises par l'équipement optique 20 et le cas échéant par le ou les équipements optiques secondaires 60.

### Enveloppe du module

En référence aux figures 2a, 2b et 3, l'enveloppe 10 comprend une ouverture traversante 11 conformée pour permettre le passage de rayons lumineux provenant du sol vers le miroir orientable 40, pour que ceux-ci puissent être réfléchis par le miroir 40 vers l'équipement optique 20, et réciproquement si l'équipement optique 20 est adapté pour émettre des rayons lumineux.

Ainsi, de préférence, et comme représenté schématiquement sur la figure 3, l'ouverture traversante 11 est conformée de telle sorte que tout rayon lumineux accepté ou émis par l'équipement optique, s'étendant selon l'axe optique O, et réfléchi par le miroir 40, passe au-travers de l'ouverture 11, et ce sur toute la ou les plage(s) angulaire(s) d'orientation du miroir.

Notamment, l'ouverture traversante 11 est avantageusement centrée sur une position angulaire qui se trouve à la verticale et en-dessous de l'axe optique O de l'équipement optique (« à 6h » par rapport à l'axe optique).

De plus, elle présente des dimensions, selon l'axe optique O et perpendiculairement à l'axe optique, suffisamment grandes pour couvrir la plage angulaire d'orientation du miroir dans chaque direction.

L'ouverture traversante 11 est dépourvue de tout hublot ou de toute protection destinée à fermer l'ouverture tout en la laissant transparente aux rayons lumineux.

En effet, positionner un hublot, qu'il soit plan ou courbe, impliquerait un surplus de masse important pour le module, et limiterait en outre la taille de l'ouverture traversante.

Il est connu aussi d'utiliser un film connu sous le nom commercial Mylar pour couvrir une ouverture, mais ce type de film n'est optiquement satisfaisant qu'en l'absence de tension appliquée. Par conséquent cette solution n'est pas applicable à l'invention car le film pourrait subir des tensions en cas de contact avec une poussière ou en cas de vent.

En outre, les conditions d'utilisation d'un drone stratosphérique permettent de s'affranchir d'un hublot ou d'une autre solution de fermeture de l'ouverture car les pertes aérodynamiques causées par cette ouverture sont limitées du fait de la faible vitesse de déplacement du drone et des courants d'air dans la stratosphère plus faibles que dans la troposhère.

Comme représenté sur les figures 2a et 2b, l'ouverture traversante 11 présente un bord curviligne adapté pour réduire les pertes aérodynamiques causées par l'ouverture. En particulier, les profils latéraux de l'ouverture traversante s'étendant sensiblement selon la direction principale X-X du module, donc vus sur les figures 2a et 2b dans la direction de l'axe Y de tangage du module, sont avantageusement oblongs plutôt qu'en demi-cercle.

De plus, comme représenté sur la figure 2b, le bord 110 de l'ouverture orienté vers l'avant du module, c'est-à-dire le bord de l'ouverture situé le plus à l'arrière par rapport à la direction de déplacement du module, est avantageusement chanfreiné. Le bord 111 de l'ouverture orienté vers l'arrière du module peut également être chanfreiné.

En référence à la figure 2a, l'enveloppe 10 est également adaptée pour permettre la réalisation de cette ouverture traversante 11 dans l'enveloppe sans dégrader la tenue mécanique du module 1.

L'enveloppe 10 comprend une structure porteuse 12 adaptée pour être montée sur le drone. Typiquement, le module de charge utile 1 forme le nez du drone, c'est-à-dire qu'il forme son extrémité avant par rapport à sa direction de déplacement.

La structure porteuse 12 est également adaptée pour porter l'ensemble des équipements qui sont placés dans le module, c'est-à-dire l'équipement optique 20, le système électronique de contrôle et de traitement 30, le miroir orientable 40 et le dispositif d'orientation du miroir 41. Ces équipements sont fixés à la structure porteuse.

L'enveloppe 10 comprend en outre un capot 15 qui est adapté pour être monté, de préférence de manière amovible, sur la structure porteuse 12, et l'ouverture traversante 11 est agencée dans le capot 15. Ainsi cette ouverture est réalisée dans une structure non porteuse, et peut donc être d'une taille éventuellement importante. Toute la masse des éléments du module est quant à elle rapportée sur la structure porteuse montée sur le drone.

La structure porteuse 12 comprend un bras porteur 13, qui comprend une première extrémité 130 adaptée pour être montée sur le drone, par exemple par vissage ou boulonnage, et une extrémité libre 131. Le bras porteur 13 peut être réalisé en matériau composite à base de fibres de carbone et de mousse structurante.

Sur le bras porteur 13 sont montés la plupart des composants du module de charge utile à savoir notamment l'équipement optique 20 et le système électronique de contrôle et de traitement 30.

Comme visible sur la figure 2a, le bras porteur 13 se situe à la verticale en dessous de l'axe optique O (« à 6h » par rapport à la position de l'axe optique), de sorte que l'ouverture traversante et le bras porteur sont alignés, l'ouverture traversante se trouvant à l'avant du bras porteur par rapport à la direction de déplacement du drone. Selon une variante de réalisation non représentée, le bras porteur pourrait également se situer à la verticale au-dessus de l'axe optique (à « 12h »), et porter l'ensemble des équipements qui sont placés dans le module, au moyen d'une structure de fixation des équipements au bras porteur. Cette variante de réalisation est cependant moins avantageuse que la première dans laquelle le bras porteur 13 protège, par sa position, les composants se trouvant à l'intérieur de l'enveloppe 13 lors de l'atterrissage du drone.

De retour à la première variante de réalisation dans laquelle le bras porteur se trouve sous l'axe optique, avantageusement, et comme représenté sur la figure 2a, l'extrémité libre 131 du bras porteur peut s'étendre selon une direction formant un angle α compris entre 5 et 10°, par rapport à la direction selon laquelle s'étend la première extrémité 130 du bras porteur, et qui avantageusement parallèle à l'axe optique.

Ceci permet, en cas d'atterrissage du drone, que la partie de l'enveloppe comprenant l'ouverture traversante ne touche pas le sol et donc ne soit pas endommagée, et cela limite également la pénétration de particules à l'intérieur du module par l'ouverture.

En référence à la figure 4, le bras porteur 13 est creux. Il présente avantageusement une paroi supérieure plane 132, formant une surface de support sur laquelle sont montés les équipements du module (équipement optique et système électronique 30), et une paroi inférieure curviligne 133. Selon un mode de réalisation particulier, la paroi inférieure 133 peut être conformée de sorte que la section transversale du bras porteur 13 soit un demi-cercle.

De plus, le bras porteur 13 comprend au moins une cloison de renforcement 134 qui s'étend de préférence sur toute la longueur du bras 13, parallèlement à la direction principale du bras 13, et sensiblement orthogonalement à la paroi plane 130.

Dans un mode de réalisation préféré représenté sur la figure 4, le bras porteur 13 comprend deux cloisons de renforcement 134 parallèles entre elles, et définissant entre elles un logement pour positionner au moins un équipement optique secondaire 60. Dans le cas représenté schématiquement sur la figure 1, deux équipements optiques secondaires 60 sont disposés dans le bras porteur 13.

L'équipement optique secondaire 60 est alors à ligne de visée fixe, pointée vers le sol. Pour ce faire l'équipement optique secondaire 60 est positionné de sorte que son axe optique soit dirigé vers le sol. Le bras porteur 13 comporte alors, sur sa paroi inférieure 133, au moins un orifice traversant 135 par lequel des rayons lumineux peuvent parvenir à l'équipement optique secondaire 60. L'orifice traversant 135 est avantageusement disposé à la verticale de l'axe X-X du module (à 6h) Cet orifice traversant est de préférence dépourvu d'un hublot ou de toute autre protection, car celle-ci serait soit trop lourde, soit fragile.

Pour pouvoir porter les autres équipements du module, et en particulier le miroir orientable 40 et son dispositif d'orientation 41, qui sont disposés à l'avant du module par rapport à l'équipement optique 20, et à l'avant du bras porteur 13, la structure porteuse 12 comprend en outre au moins un bras secondaire 14, et de préférence deux bras secondaires 14, s'étendant vers l'avant à partir de l'extrémité libre 131 du bras porteur 13.

Avantageusement la structure porteuse 12 comprend deux bras secondaires 14 s'étendant parallèlement l'un à l'autre, et à une distance l'un de l'autre permettant de monter le miroir et son dispositif d'orientation entre les bras secondaires 14. Par exemple les bras secondaires 14 peuvent s'étendre à partir de deux bords latéraux, selon l'axe Y, du bras principal.

En référence à la figure 2a, dans un mode de réalisation avantageux, le capot 15 du module est réalisé en deux parties. Une première partie 150 du capot est située à l'avant du module et loge le miroir, le dispositif d'orientation du miroir, et le ou les bras secondaires 14 de la structure porteuse. Cette première partie 150 comprend un orifice traversant qui délimite au moins en partie l'ouverture 11.

La partie avant 150 du capot 15 est avantageusement recouverte, sur sa surface intérieure, d'un revêtement noir absorbant la lumière, tel que par exemple le matériau connu sous la dénomination commerciale « Magic Black™ » commercialisé par la société Acktar, ce revêtement permettant d'empêcher la propagation de lumière parasite vers l'équipement optique 20.

La deuxième partie 151 du capot est située à l'arrière du module et loge l'équipement optique 20, et le système électronique de contrôle et de traitement 30.

Avantageusement une cloison séparatrice 50 opaque s'étend entre l'équipement optique 20 et le capot 15, transversalement par rapport à la direction principale X-X du module, de manière à obturer l'espace compris entre l'équipement optique 20 et le capot 15.

La cloison 50 est de préférence positionnée à l'interface entre les parties avant 150 et arrière 151 du capot. Par « à l'interface », on comprend que la cloison 50 se situe à une distance d'au plus 10 cm, et de préférence d'au plus 5 cm, par rapport à la séparation entre les deux parties du capot.

En tout état de cause, cette cloison 50 est avantageusement située au droit de la première portion 21 de l'équipement optique de manière à obturer l'espace entre la première portion 21 et le capot 15. De plus, dans le cas où l'équipement optique 20 comprend un dioptre d'entrée des rayons lumineux, la cloison de séparation 50 est avantageusement située au droit de ce dioptre d'entrée, et s'étend dans l'interstice compris entre le dioptre d'entrée et le capot 15.

La paroi de la cloison séparatrice 50 située du côté de la partie avant 150 du capot est de préférence également recouverte du même revêtement noir absorbant la lumière que la surface intérieure de cette partie 150. Ainsi la cloison séparatrice 50 contribue aussi à limiter la propagation ou les réflexions de lumière parasite.

Dans un mode de réalisation dans lequel la structure porteuse comporte deux bras secondaires 14, les bords de l'ouverture traversante 11 peuvent être délimités conjointement par la première partie 150 du capot, pour l'avant de l'ouverture, et par les bras secondaires 14 et le bras principal 13, pour l'arrière de l'ouverture.

### Aspects thermiques

Avantageusement, le module 1 selon l'invention est optimisé du point de vue thermique pour garantir le bon fonctionnement de l'équipement optique 20 et du système électronique de contrôle et de traitement 30 dans la plage de températures classique de la stratosphère, à savoir de -80°C à -50°C.

Pour ce faire, la cloison séparatrice opaque 50 est avantageusement thermiquement isolante.

De la sorte, cette cloison permet de séparer le module en deux espaces dans lesquels la gestion des aspects thermiques est différente. Le premier espace comprend l'ouverture traversante 11 et est donc à température ambiante. Le deuxième espace, fermé, comprend l'équipement optique 20 et le système électronique de contrôle et de traitement 30. Cet espace est adapté du point de vue thermique pour protéger ces équipements. Avantageusement, le deuxième espace est adapté pour opérer à une température de l'ordre de -40 °C quelle que soit la température extérieure au module.

S'agissant du premier espace, le miroir 40 est avantageusement réalisé en verre vitrocéramique connu sous la dénomination commerciale Zerodur, et qui présente un coefficient de dilatation thermique très faible. Ceci permet que même en cas de variations thermiques importantes dans ce premier espace où la température n'est pas régulée, le miroir ne subit pas de dilatation thermique susceptible de déformer la trajectoire des rayons lumineux réfléchis par le miroir.

S'agissant du deuxième espace, la partie arrière 151 du capot 15 est avantageusement recouverte, sur sa surface extérieure, d'un matériau réfléchissant les rayonnements infrarouge, tel que le matériau connu sous sa dénomination commerciale Teflon, sous sa forme argentée (« Silver Teflon »), afin de limiter le réchauffement des composants se trouvant dans cette partie du module.

De plus, l'équipement optique 20 est avantageusement recouvert d'un revêtement isolant thermiquement 51, comme par exemple un revêtement comprenant plusieurs couches d'isolation et connu sous l'acronyme MLI pour « Multiple Layer Insulation ». Avantageusement, la première portion 21 comprenant les éléments optiques de l'équipement optique est recouverte d'une bande de revêtement isolant 510, et un élément chauffant 52, typiquement un thermostat, est en outre positionné entre la première portion 21 et la bande 510 de revêtement isolant 51. Cet élément chauffant peut par exemple être un fil électrique ou une résistance diffusant de la chaleur par effet Joule. Cet élément chauffant 52 est en outre avantageusement programmé pour ne chauffer que lorsque la température de la portion 21 de l'équipement optique comprenant les éléments optique, ou la température de l'air au voisinage de cette portion 21, est inférieure à un seuil prédéterminé.

D'autre part, l'unité électronique d'acquisition ou d'émission 22 de l'équipement optique est également revêtue d'une bande 511 de revêtement isolant. Cette unité générant de la chaleur du fait de son fonctionnement, il n'est pas nécessaire d'y ajouter un élément chauffant.

En revanche, des bandes conductrices thermiquement 53 sont avantageusement placées entre l'équipement optique et le revêtement isolant 510, les bandes 53 s'étendant depuis l'unité électronique d'acquisition ou d'émission 22 vers la portion 21 comprenant les éléments optiques, de manière à propager la chaleur depuis l'unité électronique 22 vers la portion 21.

La carte électronique 31 comprend un radiateur 310 comprenant une pluralité de plaques parallèles 311 adaptées pour dissiper la chaleur générée par la carte électronique 31 par convection.

Pour maximiser la dissipation de chaleur, la carte électronique 31 est avantageusement montée dans le module de sorte que les plaques 311 s'étendent sensiblement perpendiculairement à la direction principale du module.

En outre, dans la stratosphère, la dissipation de la chaleur par convection est plus faible en raison de la très faible densité de l'air.

Par conséquent, pour éviter une surchauffe de la carte électronique 31, le module comprend en outre une plaque radiative 54 montée sur la carte électronique 31, perpendiculairement aux plaques 311 du radiateur 310. Cette plaque permet d'augmenter la chaleur dissipée par transfert radiatif afin de compléter la dissipation par convection.

La plaque radiative 54 peut par exemple être réalisée en aluminium anodisé.

Les dispositions décrites ci-avant concernant la gestion thermique du module permettent à la fois de réchauffer l'équipement optique pour empêcher les déformations de ses composants optiques qui amèneraient à déformer les trajectoires des rayons lumineux, et de refroidir la carte électronique d'acquisition et de traitement.

### Exemple de réalisation particulier

Selon un mode de réalisation particulier de la présente invention, l'équipement optique 20 est une caméra adaptée pour acquérir des images dans le spectre du visible, à une fréquence comprise de préférence entre 3 et 10Hz. Compte-tenu de la faible vitesse d'un drone stratosphérique (de l'ordre de 80 km/h maximum), la fréquence minimale est suffisante pour réaliser une vidéo par interpolation entre deux images successives acquises par la caméra. La caméra comprend en outre une fonctionnalité de mise au point

Le champ de vision de la caméra est de l'ordre de 1 km², et la caméra peut balayer une zone d'une largeur de l'ordre de 20 km grâce à la rotation du miroir.

Le module comporte en outre une ou plusieurs caméras secondaires 60 disposées dans le bras porteur 13, ces caméras présentant un champ de vision plus important, par exemple de l'ordre de 500 km². L'une des caméras secondaires 60 peut avantageusement être une caméra infrarouge thermique.

## Revendications

1. Module (1) de charge utile de drone stratosphérique, comprenant :
- une enveloppe (10), et
- un équipement optique (20) comprenant un axe optique (O), monté dans l'enveloppe (10),
le module étant **caractérisé en ce qu'**il comporte en outre un miroir (40) positionné sur l'axe optique en regard de l'équipement optique, le miroir (40) étant orientable autour d'au moins un axe sur une plage angulaire,
et **en ce que** l'enveloppe (10) comporte une ouverture traversante (11) conformée de sorte que tout rayon lumineux accepté ou émis par l'équipement optique (20) parallèlement à l'axe optique et réfléchi par le miroir (40) passe au-travers de l'ouverture traversante (11), sur toute la plage angulaire du miroir, l'ouverture traversante (11) étant dépourvue de tout moyen de fermeture de l'ouverture.

2. Module (1) de charge utile selon la revendication 1, dans lequel le miroir (40) est orientable selon un premier axe parallèle à l'axe optique, et selon une plage angulaire d'au moins 50°, de préférence égale à 60°, et selon un deuxième axe orthogonal à l'axe optique, selon une plage angulaire d'au moins 10°, de préférence égale à 15°.

3. Module (1) de charge utile selon l'une des revendications 1 ou 2, dans lequel l'enveloppe (10) comprend une structure porteuse (12) adaptée pour être montée sur le drone, la structure porteuse (12) comprenant :
- un bras porteur (13) comprenant une première extrémité (130) adaptée pour être montée sur le drone, et une extrémité libre (131), l'équipement optique (20) étant monté sur le bras porteur, et
- au moins un bras secondaire (14) rapporté sur l'extrémité libre (131) du bras porteur (13), et sur lequel est monté le miroir orientable (40).

4. Module (1) de charge utile selon la revendication 3, dans lequel l'extrémité libre (131) du bras porteur (13) s'étend selon une direction formant un angle compris entre 5 et 10° par rapport à la direction selon laquelle s'étend la première extrémité (130) dudit bras porteur (13).

5. Module (1) de charge utile selon l'une des revendications 1 à 4, dans lequel l'enveloppe (10) comprend une structure porteuse (12) et un capot (15) adapté pour être monté de manière amovible sur la structure porteuse (12), le capot comprenant une partie arrière (151) de protection de l'équipement optique (20), et une partie avant (150) de protection du miroir orientable (40), la partie avant (150) comprenant un orifice traversant formant au moins en partie l'ouverture (11) de l'enveloppe (10).

6. Module (1) de charge utile selon la revendication 5, comprenant en outre une cloison (50) de séparation thermiquement étanche s'étendant dans la section transversale du module, entre l'équipement optique (20) et le capot (15), à l'interface entre les parties avant (150) et arrière (151) du capot.

7. Module (1) de charge utile selon l'une des revendications 5 ou 6, dans lequel la partie avant (150) du capot (15) comprend une face intérieure recouverte d'un revêtement noir absorbant la lumière.

8. Module (1) de charge utile selon l'une des revendications 5 à 7, dans lequel la partie arrière (151) du capot comprend une face extérieure recouverte d'un revêtement thermiquement réfléchissant.

9. Module (1) de charge utile selon l'une des revendications 3 à 8, dans lequel le bras porteur (13) est creux et comporte deux cloisons internes (134) parallèles s'étendant selon la direction principale du bras, lesdites parois internes (134) définissant entre elles un logement.

10. Module (1) de charge utile selon la revendication 9, dans lequel le bras porteur (13) comprend une paroi inférieure (133) comportant au moins un orifice traversant (135) débouchant dans le logement, et le module comprend un équipement optique secondaire (60) positionné dans le logement et comprenant un axe optique passant par l'orifice traversant.

11. Module (1) de charge utile selon l'une des revendications précédentes, comprenant en outre un revêtement thermiquement isolant (51) positionné autour de l'équipement optique (20).

12. Module (1) de charge utile selon la revendication précédente, dans lequel l'équipement optique (20) comprend une première portion (21) contenant un ensemble d'éléments optiques, et une deuxième portion (22) contenant une unité électronique d'acquisition ou d'émission, un revêtement isolant (510, 511) étant positionné autour de chaque portion (21, 22), et le module (1) comprend en outre un élément chauffant (52) disposé entre la première portion (21) et le revêtement isolant (510), et au moins une bande (53) thermiquement conductrice s'étendant depuis la deuxième (22) vers la première portion (21), entre l'équipement optique (20) et le revêtement isolant (51).

13. Module (1) de charge utile selon l'une des revendications précédentes, comprenant en outre au moins une carte électronique (31) de contrôle et de traitement, ladite carte étant logée à l'intérieur de l'enveloppe (10).

14. Module (1) de charge utile selon la revendication 13, dans lequel la carte électronique (31) de contrôle et de traitement comprend un radiateur (310) comprenant une pluralité de plaques parallèles (311), et la carte électronique (31) de contrôle et de traitement est positionnée de sorte que chaque plaque (311) s'étende perpendiculairement à la direction principale du module.

15. Module (1) de charge utile selon l'une des revendications 13 ou 14, comprenant en outre une plaque radiative (54) fixée à la carte électronique (31) de contrôle et de traitement.

16. Drone stratosphérique (D), comprenant un module (1) de charge utile selon l'une des revendications qui précèdent.

## Patentansprüche

1. Nutzlastmodul (1) einer stratosphärischen Drohne, das enthält:
- eine Hülle (10) und
- eine optische Achse (O) enthaltende optische Ausrüstung (20), die in die Hülle (10) eingebaut ist,
wobei das Modul **dadurch gekennzeichnet ist, dass** es außerdem einen Spiegel (40) aufweist, der auf der optischen Achse gegenüber der optischen Ausrüstung positioniert ist, wobei der Spiegel (40) um mindestens eine Achse über einen Winkelbereich ausrichtbar ist,
und dass die Hülle (10) eine Durchgangsöffnung (11) aufweist, die so gestaltet ist, dass jeder von der optischen Ausrüstung (20) parallel zur optischen Achse akzeptierte oder emittierte und vom Spiegel (40) reflektierte Lichtstrahl durch die Durchgangsöffnung (11) über den ganzen Winkelbereich des Spiegels verläuft, wobei die Durchgangsöffnung (11) keine Schließ- oder Öffnungseinrichtung besitzt.

2. Nutzlastmodul (1) nach Anspruch 1, wobei der Spiegel (40) gemäß einer ersten Achse parallel zur optischen Achse und gemäß einem Winkelbereich von mindestens 50°, vorzugsweise gleich 60°, und gemäß einer zweiten Achse orthogonal zur optischen Achse gemäß einem Winkelbereich von mindestens 10°, vorzugsweise gleich 15°, ausrichtbar ist.

3. Nutzlastmodul (1) nach einem der Ansprüche 1 oder 2, wobei die Hülle (10) eine Tragstruktur (12) enthält, die geeignet ist, auf die Drohne montiert zu werden, wobei die Tragstruktur (12) enthält:
- einen Tragarm (13), der ein erstes Ende (130), das geeignet ist, auf die Drohne montiert zu werden, und ein freies Ende (131) enthält, wobei die optische Ausrüstung (20) auf den Tragarm montiert ist, und
- mindestens einen Sekundärarm (14), der auf das freie Ende (131) des Tragarms (13) angebaut ist und auf den der ausrichtbare Spiegel (40) montiert ist.

4. Nutzlastmodul (1) nach Anspruch 3, wobei das freie Ende (131) des Tragarms (13) sich gemäß einer Richtung erstreckt, die einen Winkel zwischen 5 und 10° bezüglich der Richtung bildet, gemäß der das erste Ende (130) des Tragarms (13) sich erstreckt.

5. Nutzlastmodul (1) nach einem der Ansprüche 1 bis 4, wobei die Hülle (10) eine Tragstruktur (12) und eine Haube (15) enthält, die geeignet ist, entfernbar auf die Tragstruktur (12) montiert zu werden, wobei die Haube einen hinteren Teil (151) zum Schutz der optischen Ausrüstung (20) und einen vorderen Teil (150) zum Schutz des ausrichtbaren Spiegels (40) enthält, wobei der vordere Teil (150) eine Durchgangsöffnung enthält, die mindestens zum Teil die Öffnung (11) der Hülle (10) formt.

6. Nutzlastmodul (1) nach Anspruch 5, das außerdem eine thermisch dichte Trennwand (50) enthält, die sich im Querschnitt des Moduls zwischen der optischen Ausrüstung (20) und der Haube (15) an der Schnittstelle zwischen dem vorderen (150) und hinteren Teil (151) der Haube erstreckt.

7. Nutzlastmodul (1) nach einem der Ansprüche 5 oder 6, wobei der vordere Teil (150) der Haube (15) eine Innenseite enthält, die mit einer lichtabsorbierenden schwarzen Beschichtung bedeckt ist.

8. Nutzlastmodul (1) nach einem der Ansprüche 5 bis 7, wobei der hintere Teil (151) der Haube eine mit einer thermisch reflektierenden Beschichtung bedeckte Außenseite enthält.

9. Nutzlastmodul (1) nach einem der Ansprüche 3 bis 8, wobei der Tragarm (13) hohl ist und zwei parallele innere Trennwände (134) aufweist, die sich gemäß der Hauptrichtung des Arms erstrecken, wobei die Innenwände (134) eine Aufnahme zwischen sich definieren.

10. Nutzlastmodul (1) nach Anspruch 9, wobei der Tragarm (13) eine untere Wand (133) enthält, die mindestens eine in die Aufnahme mündende Durchgangsöffnung (135) aufweist, und das Modul eine sekundäre optische Ausrüstung (60) enthält, die in der Aufnahme positioniert ist und eine optische Achse enthält, die durch die Durchgangsöffnung verläuft.

11. Nutzlastmodul (1) nach einem der vorhergehenden Ansprüche, das außerdem eine thermisch isolierende Beschichtung (51) enthält, die um die optische Ausrüstung (20) herum positioniert ist.

12. Nutzlastmodul (1) nach dem vorhergehenden Anspruch, wobei die optische Ausrüstung (20) einen eine Einheit von optischen Elementen enthaltenden ersten Abschnitt (21) und einen eine elektronische Erfassungs- oder Sendeeinheit enthaltenden zweiten Abschnitt (22) enthält, wobei eine isolierende Beschichtung (510, 511) um jeden Abschnitt (21, 22) herum positioniert ist, und das Modul (1) außerdem ein Heizelement (52), das zwischen dem ersten Abschnitt (21) und der isolierenden Beschichtung (510) angeordnet ist, und mindestens einen thermisch leitenden Streifen (53) enthält, der sich vom zweiten (22) zum ersten Abschnitt (21) zwischen der optischen Ausrüstung (20) und der isolierenden Beschichtung (51) erstreckt.

13. Nutzlastmodul (1) nach einem der vorhergehenden Ansprüche, das außerdem mindestens eine Elektronikkarte (31) zur Steuerung und Verarbeitung enthält, wobei die Karte im Inneren der Hülle (10) untergebracht ist.

14. Nutzlastmodul (1) nach Anspruch 13, wobei die Elektronikkarte (31) zur Steuerung und Verarbeitung einen Radiator (310) enthält, der eine Vielzahl paralleler Platten (311) enthält, und die Elektronikkarte (31) zur Steuerung und Verarbeitung so positioniert ist, dass jede Platte (311) sich lotrecht zur Hauptrichtung des Moduls erstreckt.

15. Nutzlastmodul (1) nach einem der Ansprüche 13 oder 14, das außerdem eine an der Elektronikkarte (31) zur Steuerung und Verarbeitung befestigte Strahlungsplatte (54) enthält.

16. Stratosphärische Drohne (D), die ein Nutzlastmodul (1) nach einem der vorhergehenden Ansprüche enthält.

## Claims

1. Payload module (1) of a stratospheric drone, comprising:
- a casing (10), and
- a piece of optical equipment (20) comprising an optical axis (O), mounted in the casing (10),
the module being **characterized in that** it further comprises a mirror (40) positioned on the optical axis facing the optical equipment, the mirror (40) being swivelable about at least one axis, within an angular range,
and **in that** the casing (10) has a through-opening (11) shaped so that any light ray accepted or emitted by the optical equipment (20) parallel to the optical axis and reflected by the mirror (40) passes through the through-opening (11), over the entire angular range of the mirror, the through-opening (11) being without any means of closing off the opening.

2. Payload module (1) according to claim 1, wherein the mirror (40) can be swiveled about a first axis parallel to the optical axis, and within an angular range of at least 50°, preferably equal to 60°, and about a second axis orthogonal to the optical axis, within an angular range of at least 10°, preferably equal to 15°.

3. Payload module (1) according to one of claims 1 or 2, wherein the casing (10) comprises a support structure (12) suitable for mounting on the drone, the support structure (12) comprising:
- a support arm (13) comprising a first end (130) suitable for mounting on the drone, and a free end (131), the optical equipment (20) being mounted on the support arm, and
- at least one secondary arm (14) added to the free end (131) of the support arm (13), and on which the swivelable mirror (40) is mounted.

4. Payload module (1) according to claim 3, wherein the free end (131) of the support arm (13) extends in a direction forming an angle between 5 and 10° relative to the direction in which the first end (130) of said support arm (13) extends.

5. Payload module (1) according to one of claims 1 to 4, wherein the casing (10) comprises a support structure (12) and a cover (15) able to be removably mounted on the support structure (12), the cover comprising a rear part (151) for protecting the optical equipment (20) and a front part (150) for protecting the swivelable mirror (40), the front part (150) comprising a through-hole which at least partially forms the opening (11) of the casing (10).

6. Payload module (1) according to claim 5, further comprising a thermally protective separating partition (50) extending within the cross-section of the module between the optical equipment (20) and the cover (15), at the interface between the front (150) and rear (151) parts of the cover.

7. Payload module (1) according to one of claims 5 or 6, wherein the front part (150) of the cover (15) comprises an inner face covered with a light-absorbing black coating.

8. Payload module (1) according to one of claims 5 to 7, wherein the rear part (151) of the cover comprises an outer face covered with a heat-reflective coating.

9. Payload module (1) according to one of claims 3 to 8, wherein the support arm (13) is hollow and has two parallel internal walls (134) extending along the main direction of the arm, said internal walls (134) defining a housing between them.

10. Payload module (1) according to claim 9, wherein the support arm (13) comprises a bottom wall (133) having at least one through-hole (135) opening into the housing, and the module comprises secondary optical equipment (60) positioned in the housing and comprising an optical axis passing through the through-hole.

11. Payload module (1) according to one of the preceding claims, further comprising a thermally insulating covering (51) positioned around the optical equipment (20).

12. Payload module (1) according to the preceding claim, wherein the optical equipment (20) comprises a first portion (21) containing a set of optical elements, and a second portion (22) containing an electronic capture or emission unit, an insulating covering (510, 511) being positioned around each portion (21, 22), and the module (1) further comprises a heating element (52) arranged between the first portion (21) and the insulating covering (510), and at least one thermally conductive strip (53) extending from the second (22) to the first (21) portion, between the optical equipment (20) and the insulating covering (51).

13. Payload module (1) according to one of the preceding claims, further comprising at least one control and processing circuit board (31), said board being housed inside the casing (10).

14. Payload module (1) according to claim 13, wherein the control and processing circuit board (31) comprises a radiator (310) comprising a plurality of parallel plates (311), and the control and processing circuit board (31) is positioned so that each plate (311) extends perpendicularly to the main direction of the module.

15. Payload module (1) according to one of claims 13 or 14, further comprising a radiative plate (54) fixed to the control and processing circuit board (31).

16. Stratospheric drone (D) comprising a payload module (1) according to one of the preceding claims.
